# EUROPEAN PATENT SPECIFICATION

(11) **EP 4 648 356 B1**
(45) Date of publication and mention of the grant of the patent: **02.09.2026**
(21) Application number: 24174614.8
(22) Date of filing: 07.05.2024
(51) Int. Cl.: H04L 9/40, H04B 10/118, H04K 1/02

(54) **TECHNIQUES FOR SECURING LASER SATELLITE COMMUNICATION CHANNELS**
VERFAHREN ZUR SICHERUNG VON LASERSATELLITENKOMMUNIKATIONSKANÄLEN
TECHNIQUES DE SÉCURISATION DE CANAUX DE COMMUNICATION LASER PAR SATELLITE

(43) Date of publication of application: 12.11.2025
(73) Proprietor: Deutsche Telekom AG, 53113 Bonn (DE); Technische Universität München, 80333 München (DE)
(72) Inventor: GEITZ, Marc, Hagen (DE); HOLSCHKE, Oliver, Berlin (DE); BOCHE, Holger, Berlin (DE); MÖNICH, Ullrich, München (DE); WIESE, Moritz, München (DE); TORRES FIGUEROA, Luis Angel, München (DE)
(74) Representative: karo IP

(56) References cited:
- US-A1- 2022 329 344
- OLFA BEN YAHIA ET AL: "Optical Satellite Eavesdropping", ARXIV.ORG, CORNELL UNIVERSITY LIBRARY, 201 OLIN LIBRARY CORNELL UNIVERSITY ITHACA, NY 14853, 4 April 2022 (2022-04-04), XP091195620
- FRANK ANNA ET AL: "Implementation of a Modular Coding Scheme for Secure Communication", ICC 2022 - IEEE INTERNATIONAL CONFERENCE ON COMMUNICATIONS, IEEE, 16 May 2022 (2022-05-16), pages 2900 - 2905, XP034167576, DOI: 10.1109/ICC45855.2022.9839046
- NORA ABDELSALAM ET AL: "Physical Layer Security in Satellite Communication: State-of-the-art and Open Problems", ARXIV.ORG, CORNELL UNIVERSITY LIBRARY, 201 OLIN LIBRARY CORNELL UNIVERSITY ITHACA, NY 14853, 9 January 2023 (2023-01-09), XP091411439

## Description

The invention relates to a method, communication system, a laser signal, a sending unit and/or a receiving unit for enhancing the security of laser satellite communication channels.

Satellite communication will play an important role in future networks. For example, commercially viable satellite constellations like Starlink (SpaceX), Kuiper (Amazon), Iris (EU) and Beidou (China) are currently being developed with the aim of ensuring seamless networking of digital services worldwide. The aforementioned satellite constellations consist of a large number of satellites (several thousand) that orbit the earth like a network in low earth orbit (LEO). The satellites communicate with each other and transmit their signals to terrestrial users. The radiation behavior of the satellites is spatially diverse, i.e. each satellite is able to dynamically adapt its coverage area or the region covered on the earth's surface. The satellite constellations are controlled and managed by one or more control centers via specially secured control channels. There are satellite constellations that communicate by using laser beams, wherein data is being transported by these laser beams. One example of such a planned satellite constellation is the Hydron system of the ESA (European Space Agency), also known as "Wire in the Sky". With Hydron, laser-driven 100 Gbit/second data channels are planned between satellites and ground stations, which will enable fast broadband internet worldwide.

The new generation of mobile networks will also have a satellite-based component. The so-called "Non Terrestrial Networks" (NTN) integrates satellite-based communication into the latest generation of mobile networks. Studies predict that future satellite networks will reach a total capacity of 9.26 Pbps by the year 2030. The plan is to use a constellation of 3600 satellites distributed over five altitude layers. Each satellite should support bandwidths of up to 1.2 Tbps.

Satellites will be able to ensure the networking of different metropolitan regions worldwide, whereby the latency and throughput of communication routes can be improved thanks to the seamless integration of technologies. The trend towards satellite-based services will be reinforced by the first realization of satellite-based mobile services, such as the emergency message that the latest generation of iPhones can send via satellite even from the most remote areas of the world. Laser-based communication systems will provide an alternative backbone for supplying metropolitan regions as well as rural areas around the world.

However, encryption and data security currently only play a subordinate role for satellites and satellite constellations. This is due to the marginal energy budget of a satellite, whose energy production is limited due to the finite size of the solar sails. The scarce energy is currently mainly used for the main tasks of the satellites, e.g. recording measurement series, digital image processing, data compression and sending data to the ground station. However, the new generation of satellites will support digital services, so in future the same security standards will have to be applied to satellite communication as in terrestrial networks.

OLFA BEN YAHIA ET AL: "Optical Satellite Eavesdropping", ARXIV.ORG, CORNELL UNIVERSITY LIBRARY, 201 OLIN LIBRARY CORNELL UNIVERSITY ITHACA, NY 14853, 4 April 2022 (2022-04-04) discloses a sending unit for enhancing a security level of a communication message m that is used in a satellite based communication system, wherein the sending unit is configured to send the message m to a receiving unit over a communication path T.

In the view of above, it is an object of the present invention to provide an efficient means to enhance the security of satellite-based communication systems.

This object is solved by the features of the independent claims.

According to a first aspect of the invention a sending unit is being disclosed for the communication in a satellite-based communication system, wherein the sending unit is designed for enhancing a security level of a communication message m, the satellite-based communication system can use laser beams within the IR and/or visible light spectrum,
wherein the sending unit is configured to send the message m to a receiving unit over a communication path T; the message m can be provided to the sending unit and/or created within the sending unit; the sending unit comprises processing and/or storage means to run dedicated algorithms that enable the sending unit for example to process the message, start the message, etc.; the sending unit comprises sending means like a resonator, an aperture and/or an antenna to communicate with a receiving unit;
wherein a PLS-component (PLS= physical layer security) of the sending unit adds artificial noise of a level N_{Art} to the message m to transform it to a communication signal x, in particular wherein the level N_{Art} is designed to make the message m unreadable for an eavesdropper that has a worse signal-to-noise ratio than a legitimate receiving unit; the eavesdropper can be a spy drone or a spy satellite or even a spy antenna placed on earth's surface, which depends on the actual properties of the communication path T; for example, if the communication path goes as sidelink from one satellite to another satellite than the eavesdropper needs to be a spy satellite; ); in particular the PLS-component can make use of a pre-distributed, public seed of random numbers (number);

Thereby the noise is artificial and its level N_{Art} is designed to make the message m unreadable for an eavesdropper that has a worse signal-to-noise ratio than a legitimate receiving unit,
wherein the artificial noise level N_{Art} is determined such that the condition$U \left(z\right) {{T}_{sys}}^{E} {{/ T}_{sys}}^{A} < 1$ is fulfilled.

Additionally, the sending unit is further configured to adapt the aperture of the laser beam, whereby the aperture of the laser beam is more than 1 meter
It is a core idea of the invention that the sending unit is configured to send the communication signal x as a laser signal x. Hence, the laser signal x is part of a laser beam. It follows that the feature could also be expressed by saying: It is a core idea of the invention that the sending unit is configured to send the communication signal x as part of a laser beam or by using a laser beam. All the features of the invention together can therefore advantageously enable that the attacker is not able to obtain a better physical channel than the legitimate receiver under real conditions.

Typical communication systems and not based on communication paths that have a straight line-of-sight to the receiving unit. As this is the case with the satellite communications systems that are discussed with in this invention, laser beams can be used for the communication between a ground station and a satellite or between satellites. Furthermore, the invention for the first time realizes that laser beams are of particular advantage to apply the PLS technique because the properties of laser beams can be controlled in a way that the signal-to-noise ratio for a legitimate receiver becomes better than for a spy drone or spy satellite. Hence, by combining the PLS technique together with the laser beams a satellite communication system can communicate with each other without using encryption techniques that introduces "encryption" latency and/or increases energy consumption of satellites that only have a limited amount of power as described above. In particular, the laser beam can be of Gaussian shape in the mode TEM₀₀. By using TEM₀₀ the best signal to noise ratios can be achieved. The laser can be an infrared (IR) and/or a visible light laser.

In an embodiment, the sending unit is a satellite or a ground station, wherein the satellite is configured to communicate with a further satellite and/or wherein the ground station is configured to communicate with a further ground station and/or wherein the satellite is configured to communicate with the ground station and vice versa.

This provides the advantage that the satellite and/or the ground station can be the sending units that apply the PLS method. It is of particular advantage if the satellite is the sending unit that uses the PLS-technique, because it can be assumed that the downlink and/or the sidelink as being the communication path T provides in all realistic scenarios a better signal-to-noise for the legitimate receiver that can be expected for the eavesdropper.

In an embodiment, wherein the communication path is a line-of-sight communication path.

This provides the advantage that the satellites and/or the ground stations can communicate with each other with the best achievable latency without using further forwarding entities and that the direction of the communication path is known so that it can be observed if an eavesdropper is within the line-of-sight. In an embodiment, the sending unit is configured to send at least one partial communication signal x' directly to a receiving unit and/or to a forwarding unit, in particular a satellite of the satellite constellation, that forwards the at least one partial communication signal x' to the receiving unit, wherein the partial communication signals x' make up the communication signal x.

This provides the advantage of splitting up the message into more than one part so that even if the eavesdropper will be able to receive a partial communication signal x' with better signal-to-noise ratio than the receiving unit, the eavesdropper does nevertheless not receive enough information to make up the original communication signal x. the partial communication signals x' can be generated by the sending unit or can be provided to the sending unit
In an embodiment, the sending unit comprises more than one laser resonator and/or sending antenna, wherein the laser resonators and/or sending antennas of the sending unit (in particular if the sending unit is the ground station) are spatially separated, in particular by more than 10 meters if the sending unit is ground station or more than 30 cm if the sending unit is satellite, so that the partial communication signals x' are send over spatially separated communication paths T so that a single spy drone, in particular with an antenna size of less than 1 meter, cannot intercept all the partial communication signals x' simultaneously. Partial communication signals x' are of special advantage in the use case of an uplink but can also be applied to the sidelink and/or the downlink type.

This provides the advantage that a single sending unit can send the communication signal x over locally separated paths that are very unlikely or even impossible to be interceptable by a single spy drone/satellite. Hence, the spy drone or the spy satellite can only intercept a partial message.

As claimed, the sending unit is configured to adapt the aperture of the laser beam, whereby the aperture of the laser beam can be more than 1 meter for the case of the ground stations. If the sending unit is satellite the aperture of the laser beam can be more than 20 cm, in particular more than 30 cm. This can be applied to all communication links, but as exact before it is of special advantage to applied to the uplink as the uplink provides the best signal to noise ratio for the attacker.

The advantage that the Rayleigh-length of the laser beam is dramatically increased so that it can be assumed that the beam dimensions of the laser when arriving at the receiving unit is more or less identical, in particular roughly 1% larger, as the beam dimensions of the laser beam sent by the sending entity. This provides the advantage that the receiving antenna of the receiving unit can be adapted accordingly and that the laser beam can be increased to such a size that it is very unlikely that, for example a spy drone, will be able to carry a receiving antenna of this dimension. It can be expected, that a spy drone cannot carry a receiving antenna of more than 10 cm so that it can only intercept a small part of the laser beam which yields to a better signal-to-noise ratio for the spy drone.

In an embodiment, the sending unit is configured to encrypt the message M, in particular if the communication path is an uplink.

This provides the advantage of additionally increasing security if it cannot be sure that the signal-to-noise ratio is worse in case of the eavesdropper - the condition the receiver has a better signal to noise ratio than the eavesdropper might not be valid for every scenario regarding an uplink communication direction. If the encryption is only applied to the communication signal x in the uplink direction it is nevertheless more energy-efficient then applying it to all communication directions (uplink, sidelink, downlink) even if it costs additional energy for the satellite to decrypt the message, the satellite can nevertheless send its own message without using encryption so that its energy consumption is being reduced. In any case, encryption can be applied to all communication links (uplink, sidelink, downlink) to further increase the security. There is even a tendency in modern data communication techniques, to apply multiple security schemes simultaneously to enhance security.

In an embodiment, the sending unit and/or the receiving unit (that is described in further detail later on) comprises or is associated to detection means, wherein the detection means is configured to detect a spy drone and/or a spy satellite, in particular within the line-of-sight of the communication path.

This provides the advantage that the sending unit and/or the receiving unit gets aware of the possible eavesdropping regarding its communication. It is of advantage if the detection means are implemented within the sending unit because in this most beneficial to observe the line-of-sight (as the line-of-sight starts anyway from the sending unit). The detection means can be a radar system, optically cameras and/or laser test messages. In particular, if laser test messages are used, the sending unit can make use of the laser unit that is anyway implemented to send the communication signal x. The receiving unit can report that it has received a "test laser signal" so that the sending unit can determine that the line-of-sight is free from eavesdropper. Also the dropping of intensity within the laser beam can be registered by the receiving unit and it can be determined from this dropping (for example if it is a drop in laser intensity of more than 10%) that an eavesdropper intercepts the laser signal. In principle, it could be the case that the eavesdropper receives the communication signal x and forwards it with the original properties. To overcome this deception maneuver, the communication signal can comprise - in particular encrypted - position information of the sending unit and the sending timestamp. Based on this information, the receiving unit can determine if the communication signal x is being received in time or if it is being delayed, for example due to the forwarding of the eavesdropper that will take some time. If the detection means are part of the receiving unit, the detection results can be communicated to the sending unit so that the sending unit can adapt its sending behavior accordingly. It is possible that the receiving unit sends the detection results over different communication path - in particular not over the line of sight direction - so that the spy is not capable of blocking the "alert" message from the receiving unit to the sending unit.

The detection means can also measure a distance of a spy object and determining if the distance of the spy object leads to a worse signal-to-noise ratio for the spy object so that communication is being safe.

The sending unit can be configured to trigger counter measurements if a spy drone and/or a spy satellite is being detected, wherein the counter measurements are:
- stopping the sending of the communication signal x;
- delaying the sending of the communication signal x, in many cases it will be difficult for spy drone to hold its position within the communication path for long time;
- encrypting the message m with encryption means;
- triggering a position change of the sending unit and/or the receiving unit, this creates a new communication path with a different line of sight; and/or
- sending the communication signal x as partial communication signals x' over separated communication paths T.

In an embodiment, the sending unit comprises a random-number generator, in particular a QRNG, that is configured to create random numbers along with a public RND ID, wherein at least the random numbers are part of a message m, wherein the at least one satellite is configured to send the message m to a ground stations via a communication path T. If random numbers that can be used to create encryption keys shall be distributed, it is possible to increase N_{Art} for example by 50% compared to a normal transmission of communication data as it is very crucial to securely transmit encryption key components.

This provides the advantage of efficiently and safely distributing keys that can be used for encryption. If two different communication partners, in particular a first and second ground station, are not within the line of sight of a single satellite, then first satellite can send the random numbers along with the RND-ID to the first ground station and/or to a second satellite, wherein the second satellite or the first satellite can send the random numbers along with the RND-ID to the second ground station. Based on this information, the first ground station and the second ground station can then establish their encrypted communication.

According to a second aspect of the invention, a method is provided to enhance a security level of a communication message m, in particular in a satellite based communication system, comprising the following steps:
- Providing a communication message m to a sending unit, in particular to a sending unit described above; the message can also provide the random numbers and/or with the RND-ID described above, the message m can be created by the ground station or the satellite itself;
- Adding artificial noise of a level N_{Art} to the message m to transform it to a communication signal x, in particular wherein the level N_{Art} is designed to make the message m unreadable for an eavesdropper that has a worse signal-to-noise ratio than a legitimate receiving unit;
- Using a laser entity to send the communication signal x as a laser signal. In the context of this invention, the terms laser entity and laser unit are being considered as being technically equivalent.

According to a third aspect of the invention a laser signal x is being disclosed to enhance a security level of a communication message m, in particular in a satellite based communication system, wherein the Laser signal x obtainable by the method described above.

The inventive laser signal x provides all the properties of enhancing the security in a laser based satellite communication system. An exemplary laser signal can have an aperture of 1 m (for the uplink) or 0.30 (for the downlink or the sidelink) and can be secured by a PLS technique. In an embodiment, aN IR laser can be used having a wavelength of 1064 nm, because of the minimum atmospheric absorption at the respective wavelength.

According to a fourth aspect of the invention, a receiving unit for the communication in a satellite based communication system is being disclosed, wherein the receiving unit is designed for enhancing a security level of a communication message m, wherein the receiving unit is configured to receive and process a laser signal x sent over the communication path T. In particular, the receiving unit comprises a PLS component to remove the artificial noise N_{Art} in order to obtain the original message m. The receiving unit can also comprise the detection means described above. The receiving unit can be a satellite and/or a ground station. The size of the receiving antenna of the receiving unit can be 1 m or larger than 1 m if the receiving unit is a ground station or the size of the receiving antenna can be more than 30 cm if the receiving unit is a satellite.

The receiving unit can be further configured to decrypt the laser signal x when it was encrypted by the sending unit and/or to decode the security code.

In an embodiment, the receiving unit is a first ground station that receives random numbers transmitted via a laser signal x described above and that receives corresponding RND ID, in particular also as part of the laser signal x, wherein the ground station communicates with a second ground station based on the RND ID to use the same random numbers as a basis to generate the cryptographic key.

This enables a communication with encryption keys that have been transmitted securely using the PLS technique in downlink direction, wherein the downlink direction can be considered to having always a better signal-to-noise ratio than a possible eavesdropper can have.

According to a fifths aspect of the invention, a satellite-based communication system is being disclosed for enhancing a security level of the communication message m, wherein the satellite based communication system comprises the sending unit described above, the receiving unit described above and is configured to execute the method described above.

The satellite-based communication system is also being configured to distribute the seed S, that is described below, amongst the respective communication partners. For example, the seed can be generated by a ground station and sent to a further ground station and/or the satellites.

In the following, preferred implementation examples of the present invention are explained with reference to the accompanying figure:
- Fig. 1:: shows a schematically overview of the PLS technique;
- Fig. 2:: a Gaussian laser beam;
- Fig. 3:: calculation of U(z) vs. z according to a first embodiment;
- Fig. 4:: calculation of U(z) vs. z according to further embodiments;
- Fig. 5:: shows Newtonian beam optics to increase w₀ of the
- Fig. 6:: shows an embodiment of the communication system according to the invention.
- Fig. 7:: shows the embodiment of the communication system according to Fig. 6 with additional monitoring means.
- Fig. 8:: shows splitting the messages into partial messages that are sent via different paths of the satellite constellation.
- Fig. 9:: shows a path-diversified arrangement;
- Fig. 10:: illustrates a distribution of random numbers according to an aspect of the invention;
- Fig. 11:: shows a method how to distribute random numbers according to Fig. 10;
- Fig. 12:: illustrates another embodiment of distribution of random numbers according to an aspect of the invention;
- Fig. 13:: shows a method how to distribute random numbers according to Fig. 12;

In the following, numerous features of the present invention are explained in detail by means of preferred embodiments. The present disclosure is not limited to the specifically named combinations of features. Rather, the features mentioned in different embodiments can be combined arbitrarily into inventive embodiments, unless this is expressly excluded below.

In the following, if any functional unit does the calculation it is to be understood that this functional unit comprises appropriate processing units and/or storage means to perform calculations and/or to run a computer program.

The content of the European patent application EP 22209986 describes the basic concepts of the PLS technique to realize semantic security in communication systems. Some key points of EP 22209986 are nevertheless explicitly described in the following:
A possible PLS set up is as follows: a security module SMs of a sending unit for enhancing a security level of a communication signal is provided, wherein the security module SMs is configured to receive a message m as input data and configured to transform it to a communication signal x comprising the message m, wherein the security module SMs comprises:
- an artificial-noise-generating component configured to add artificial noise of a level N_{Art} according to a function *f*⁻¹(*m*) to the message m so that
   ∘ after a transmission of the communication signal x over a communication channel T with a noise level N_{T} to a receiver that transforms the communication signal x to the communication signal y, the message remains readable to the receiver;
      ▪ the communication signal x has been transformed to the signal y because of the of the noise N_{T} of the communication channel. Within the context of this invention, we also refer to a communication path, wherein communication path and communication channel are technically identical. A communication channel can be realized as a wireless communication channel. It is also possible that the communication channel is a mix of a wireless communication terminal and fixed line channel. In particular, the communication can be based on a data set transmitted by laser beams. The type of all the properties of the respective communication channel determines its noise level N. In general, a fixed line communication channel has less noise than a wireless line communication channel and a communication channel with the shorter distance has less noise than a communication channel with longer distance.
      ▪ the receiver of y can apply f(y), which is the inverse function of *f*^{*-*1}(*m*), in order to make the message m readable again. In the following, *f(y)* and *f*⁻¹(*m*) are referred to security functions or artificial-noise-generating functions; to distinguish that the receiver gained m from *f*(*y*) it can also be specified as *m̂*.
      ▪ in an embodiment, the artificial-noise-generating component can be realized as a **PLS** component - in this case, the functions *f(y)* and *f*⁻¹(*m*) can also be described as **PLS** functions;
      ▪ in general, all the functions described in the invention can be implemented as a computer program on a processor of the various security modules described or on a processor of a sending unit, receiving unit or a sever comprising a security module;
   ∘ after a transmission of the communication signal x over a communication channel E with a noise level N_{E} larger than N_{T} to an eavesdropper that transforms the communication signal x to the communication signal z, the message gets unreadable to the eavesdropper;
      ▪ in particular, the artificial noise is only known to the artificial-noise-generating component and can be generated in a randomized fashion; the artificial noise can insert bits of useless information into the message m. Due to the noisier channel N_{E}, this results in so many bit errors to the communication signal z so that any bit error correction method of a receiving terminal of the eavesdropper would result in so many possible "original" messages that it is in principle not possible that the eavesdropper gains any information about the true message m. When perfect semantic security holds, every one of the possible "original" messages has the same likelihood being the original message m;
         - this can be illustrated by the following example: an error correction scheme shall be able to correct one bit out of a 3 bit message: The message is only the following 1 bit message: "1", but 2 more bits of artificial noise are added by *f*⁻¹ that yields: "001"
         - Bob's channel has the noise rate N_{T} that only causes 1 bit error. A possible message Bob receives is "101". Since the error correction scheme can correct one bit, Bob corrects "101" to "001" and then applies f to get the true message "1";
         - Eve's channel has the noise rate N_{E} that can cause 3 bit error. A possible message Eve receives is "110". Since the error correction scheme can only correct one bit, Eve gets many possible "original" messages. For example, if the first bit was successfully corrected, then Eve gets the following possible "original" messages: 1) "000", 2) "001", 3)"010", and 4) "001". However, Eve has no information, which of the 4 results is the right one. Even this illustrative schema, that does not cover the whole complexity of N_{Art}, shows how fast it gets impossible for Eve to gain the true original message m;
         - N_{Art} is configured in such a way that is impossible to reconstruct the message m from the communication signal z;
      ▪ the communication signal z is different from y because the communication channels T and E have different noise levels. The value of N_{Art} is set so that even if the eavesdropper applies *f*(*z*), he cannot obtain a readable version of m but something else that does, in the ideal case, not reveal any information of m. The artificial noise level N_{Art} degenerates in combination with the noise level N_{E} the communication signal so much that *f*(*z*) = m does not work. The eavesdroppers, against whom the invention secures a message transmission, are allowed to do everything, i.e. also to apply transformations, which are not to be implemented on a computer at all without being able to obtain the original message.

The sending unit and/or the receiving entity can be in principle any technical unit that creates messages and sends communication signals, for example a server, a smart phone, tablet, a computer, an loT-device, ground stations, satellites, drones and etc. In particular in the case of this invention, the sending unit and/or the receiving entity are ground stations, satellites and/or drones that are configured to send/or receive data sent by laser beams.

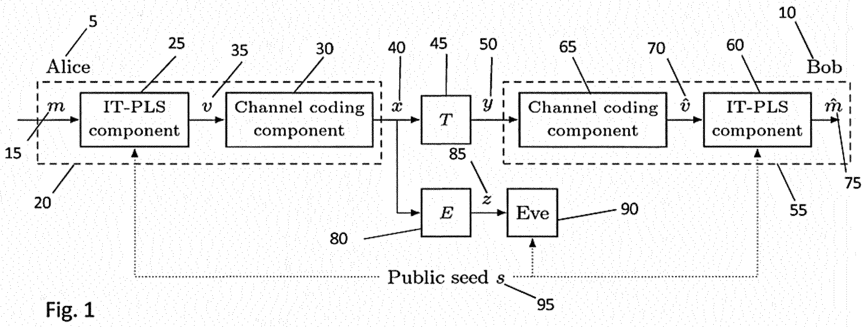

- Fig. 1:: shows an shows a schematically overview of the PLS technique;

A user Alice can use a sending unit 5, like a ground station 110 or a satellite 130 or any other communication terminal 5, to send a message to the receiving terminal 10 of a user Bob, the receiving terminal 10 can also be a ground station 110 or a satellite 130 or any other communication terminal 5. The sending unit 5 generates a message m 15, wherein the message m 15 is being transmitted to a security module 20. The security module SMs 20 comprises an artificial-noise-generating component 25, in particular a PLS component 25, and can additionally comprise a channel coding component 30, in particular with a FEC functionality. The artificial-noise-generating component 25 and the channel coding component 30 can be arranged in a modular way independently from each other and work as follows: the message m 15 is an input for an artificial-noise-generating component 20 and is processed by the artificial-noise-generating component 20 to become an output of the artificial-noise-generating component that is labeled as communication signal v 35, wherein the artificial-noise-generating component 20 adds artificial noise of a level N_{Art} to the message m 15 according to the security function *v = f*⁻¹(*m*). Then, the communication signal v 35 is an input of the channel coding component 30 and is processed by the channel coding component 30 to become an output that is called communication signal x 40 by adding redundancy information that can be used to correct the signal by the receiving unit 10. The communication signal x 40 can be sent by means of a laser beam. Hence the sending means can comprise a laser device.

The communication signal x 40 can then be transmitted by sending means of the sending unit 5 over a communication channel T 45 with a noise level N_{T} that transforms the communication signal x 40 to the communication signal y 50. The communication signal y 50 is being received by the receiving unit 10 of Bob and is an input of a security module SM_{R} 55 of the receiving unit 10. The security module SM_{R} 55 comprises an artificial-noise-removing component 60, which can be a PLS component 60, and can comprise a channel coding component 65. The artificial-noise-removing component 60 and the channel coding component 65 can be arranged in a modular way independently from each other and work as follows: The communication signal y 50 is an input of the channel coding component 65 that corrects bit-errors of the communication signal y 50, which has been introduced by traveling over the communication channel T 45 with a noise level N_{T}. This transforms the communication signal y 50 to the communication signal *v̂* 70. *v̂* 70 is the input of the artificial-noise-removing component 60 that applies the security function *m̂ = f*(*v̂*), wherein *m̂* 75 corresponds to the original message m 15. Hence, Bob is able to read the original message m 15.

By sending the communication signal x 40, the communication signal x 40 is in general not only restricted to travel over the communication channel T 45. For example, if the communication signal x 40 is a wireless communication signal it travels into many directions in parallel that corresponds to many different communication channels or it can be intercepted by a spy drone. In particular, the communication signal x 40 can travel over the communication channel E 80 that has a noise level N_{E} that is larger than the noise level N_{T}. If the added artificial noise N_{Art} was set appropriately this leads to the effect that traveling over the noiser communication channel E transforms the communication signal x 40 to a communication signal z 85 that shows so much random noise that it is not possible to obtain the original message wherein *m̂* 75 by Eve with her communication terminal 90 - in other words the communication signal z 85 is semantically secure. This can be expressed mathematically as *m̂* ≠ *f*(*ẑ*).

Even more randomness can be generated to the communication signal x 40 if a public seed S 95 is being applied as follows ${f}_{S}^{- 1} \left(m, S\right)$ and *f_{S}*(*y*, *S*) and shared between Alice and Bob. Even knowing the public seed S 95 does not help Eve to obtain the original message m because of the semantic security.

The communication signals x 40 or v 35 are being characterized as to have an artificially added noise level N_{Art} that is designed so that *m̂ = f*(*v̂*) can be applied if the communication signals x 40 or v 35 travel over a communication channel T with a noise level N_{T} and that the artificially added noise level N_{Art} , i.e. the amount of added useless information, is high enough so that *m̂* ≠ *f*(*ẑ*) results if the communication signals x 40 or v 35 travel over the noisier communication channel E with a noise level N_{E}.

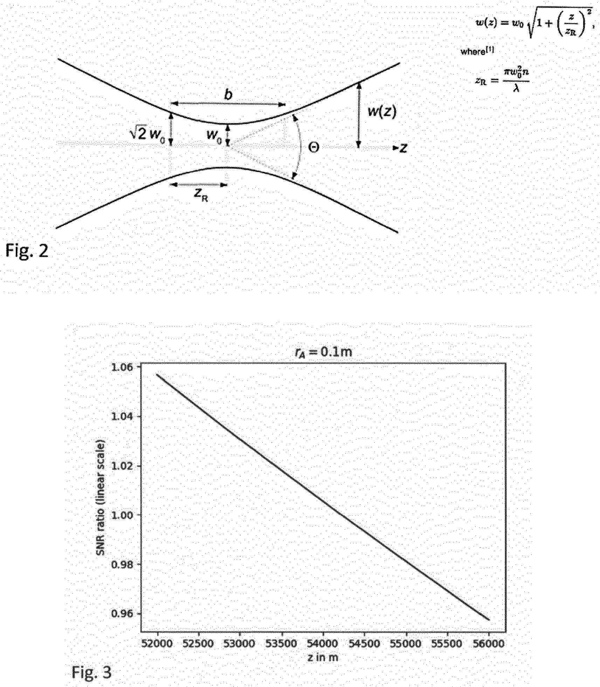

In an embodiment aspects of Fig. 2 can also be described as follows: If we consider any communication system with any channel code realization, where the channel code performs well, then the proposed architecture employs an additional IT-PLS component 25 that introduces semantic security into the system. Out of this IT-PLS component 25, multiple IT-PLS encoder and IT-PLS decoder 60 implementations are possible. A feature of the proposed system architecture is that by employing the IT-PLS encoder and the IT-PLS decoder, which can be realized using different code constructions, we can achieve semantic security independent of the error correction code and other physical-layer procedures used. The proposed architecture offers semantic security for different channel conditions. In order to achieve this, it can dynamically adapt the rate of the IT-PLS component 25, *R*_{PLS}, according to a rough estimation of the channel output to the eavesdropper. In contrast to state-of-the-art code constructions, in the proposed architecture design the knowledge of the channel conditions to the eavesdropper must not be necessarily known to the transmitter in order to ensure semantic security. An estimated value, which does not need to be particularly precise, suffices to adapt the secrecy rate accordingly. The **IT-**PLS component 25 of the proposed architecture can employ a seeded technique. That is, the public seed can be used for assuring semantic security and countering the uncertainty regarding the knowledge of the channel to the eavesdropper. The advantage of using the public seed is that the architecture remains resilient against eavesdropping attacks despite an incomplete knowledge about the eavesdropper's channel conditions.

In the following we assume that the laser beam can have the properties of the so-called Gaussian beam.

In optics, a Gaussian beam is an idealized beam of electromagnetic radiation whose amplitude envelope in the transverse plane is given by a Gaussian function; this also implies a Gaussian intensity (irradiance) profile. This fundamental (or TEM₀₀) transverse Gaussian mode describes the intended output of many lasers, as such a beam diverges less and can be focused better than any other. When a Gaussian beam is refocused by an ideal lens, a new Gaussian beam is produced. The electric and magnetic field amplitude profiles along a circular Gaussian beam of a given wavelength and polarization are determined by two parameters: the waist w0, which is a measure of the width of the beam at its narrowest point, and the position z relative to the waist.

The Gaussian beam parameters are described in Fig. 2.

The shape of a Gaussian beam of a given wavelength λ is governed solely by one parameter, the beam waist w₀. This is a measure of the beam size at the point of its focus (z = 0 in the above equations) where the beam width w(z) (as defined above) is the smallest (and likewise where the intensity on-axis (r = 0) is the largest). From this parameter the other parameters describing the beam geometry are determined. This includes the Rayleigh range z_{R} and asymptotic beam divergence θ, as detailed below.

The propagation of a laser beam can be described using beam parameters as shown in Fig. 2.

In an embodiment of the invention, the transverse expansion of the laser beam is in its fundamental mode according to a Gaussian distribution, whereby the thick line in Figure 2 corresponds to the width of the beam intensity distribution $I \left(r, z\right) = \frac{1}{2} {c}_{0} {ε}_{0} {\left|E\left(r, z\right)\right|}^{2} = {I}_{0} {\left(\frac{{w}_{0}}{w \left(z\right)}\right)}^{2} {e}^{- \frac{2 {r}^{2}}{w {\left(z\right)}^{2}}}$ wherein
*w*₀ denotes the transverse expansion of the beam waist and w(z) the development of the transverse expansion as a function of the propagation width z. The assumption of the TEM₀₀ fundamental mode of a laser beam is realistic and can be enforced in the resonator using pinhole apertures or similar. Far-field divergence and beam waist form a constant relative to the wavelength of the laser. The wavefronts are not flat, but generally curved. 3*w(z), i.e. 3x the width of the beam caustic of the Gaussian beam, corresponds to approximately 99.8% of the total laser beam intensity within a circular receiver area or receiver antenna (3**w*(*z*) corresponds to three standard deviations of the Gaussian distribution). The lower the intensity of the primary beam at the tails of the Gaussian distribution, the worse the signal-to-noise ratio at these points.

The transverse expansion of a TEM₀₀ fundamental mode can be calculated by: $w \left(z\right) = {w}_{0} \sqrt{1 + {\left(\frac{z}{{z}_{R}}\right)}^{2}} ,$ wherein *z_{R}* is referred to as the Rayleigh length. The Rayleigh length is defined by: ${z}_{R} = \frac{π {w}_{0}^{2}}{λ}$ with *λ* being the wavelength of the laser beam.

Thus, the transverse dimensions of a laser beam can be estimated depending on the wavelength *λ* of the light and the dimension of the transmitter (laser aperture) as a function of the distance between the ground station and the satellite or as the distance between satellites:
Typical data from satellite laser communication systems, such as the ESA's EDRS (ground station) system, are:

**Table 1**

| Beam characteristics EDRS system | Typical values |
|---|---|
| Wavelength | 1064.625 nm ±11 pm |
| Aperture w₀ [Telescopes] | 0.1m [laser beam] |
| Raleigh length z_{R} | 29.50 km |
| Satellite altitude z | 400 km |
| Beam width w(z) at the satellite's altitude | 1,36 m |

Thus, a TEM₀₀ mode of a laser beam with a wavelength of 1064 nm at an aperture of 10 cm expands by a factor of 13. Within a beam width of 1.36 m at the receiver with an assumed antenna diameter of 1m, there is then approx. 86% of the total intensity of the transmitted message. A receiving antenna with a diameter of 10cm would only receive 12% of the transmitted intensity. As the width of the laser beam is approximately 1.3 times as large as the receiving antenna of the satellite (assuming a 1m diameter of the receiving antenna), the signal strength at the receiver must be reduced by a factor of the satellite area to the beam caustic. This is expressed mathematically by an error function erf(x). The signal to noise ratio will deteriorate by the same factor.

This spatial limitation of the size of receiving antennas means a clear spatial limitation of the transmitted information. With LEO-satellites, the telescope of the ground station must also be rotated with the satellites, so that the spatial limitation changes over time - this makes an attack via a drone unlikely and very limited in time. The same is the case for MEO satellites. Only in the case of the geostationary satellite configuration is the satellite antenna or laser emitter stationary, so that a stationary configuration must be assumed here.

The beam caustic depends on the aperture of the transmitting antenna. The transverse expansion of the beam caustics for different apertures of the transmitting antenna is as follows:

| Aperture | Rayleigh length | Beam waist w(z) after z=400km | Expansion |
|---|---|---|---|
| 1 m | 2950 km | 1,01 m | 1 % |
| 0,25 m | 184 km | 0,6 m | 2,4 * 100 % |
| 0,1 m | 29,5 km | 1,36 m | 13,6 * 100 % |
| 0,01 m | 295 m | 13,5 m | 1350 * 100 % |

The larger the aperture of the transmitter, the reduced is the expansion of the laser beam. To take advantage of this effect, the transmitter will use a Newtonian beam optic, for example, to increase the aperture of the transmitter.

In the following, an uplink describes data traffic from a ground station to a satellite, a sidelink the data traffic between the satellites and a downlink the data traffic from the satellites to the earth-bound receivers, in particular to a ground station.

Since the security of the PLS method and the configuration of the security code is based on the best possible signal-to-noise ratio (S/N) that an attacker can obtain, the S/N values for laser-based satellite communication must be estimated.

The intensity of a Gaussian laser beam as a function of the distance in the propagation direction z and the radial expansion r (perpendicular to the propagation direction) can be described by formula 1 as described above. By definition, the signal-to-noise ratio (SNR) is the quotient of the signal intensity of the laser (formula 1) and the noise intensity: $SNR = \frac{{P}_{Laser}}{{P}_{Noise}}$

The noise power is described as P_{Noise} = B * k * T_{sys}, where B is the bandwidth [s⁻¹ ] of the signal, k is the Boltzmann constant [1.38064852 × 10⁻²³ m² kg s⁻² K-¹ ] and T_{sys} is the system temperature. P_{Noise} therefore has the correct dimension [J/s = W]. The final expression of the signal-to-noise ratio is thus: $SNR = \frac{{P}_{Laser}}{{P}_{Noise}} = \frac{{I}_{0} {\left(\frac{{W}_{0}}{W \left(Z\right)}\right)}^{2} {e}^{- \frac{2 {r}^{2}}{w {\left(z\right)}^{2}}}}{B k Tsys} ;$

The following physical variables therefore have an influence on the SNR of a laser beam:

| Physical quantity | Description |
|---|---|
| I₀ | Intensity or power of the laser beam |
| w₀ | Beam width of the transmitter |
| z | Distance of the detector from the source |
| k | Boltzmann constant |
| | k=1.38064852 × 10-23 m2 kg s-2 K-1 |
| T_{sys} | Effective temperature of the entire system, i.e. T_{sys} describes the thermal energy of the transmitter, the transmission path and the receiver. |
| B | Bandwidth of the signal |

The ratio of the signal-to-noise ratio of the attacking antenna or detector to the legitimate antenna or detector is decisive for system security.

Typically, an attacker differs from the legitimate receiver by the reception characteristics of the parabolic antennas, detectors or telescopes. $\begin{matrix}U \left(z, {r}_{A}\right) = \frac{{\int }_{0}^{{r}_{A}} \frac{1}{w {\left(z\right)}^{2}} exp \left(\frac{- 2 {r}^{2}}{w {\left(z\right)}^{2}}\right) dr}{{\int }_{0}^{{r}_{Sat}} \frac{1}{w {\left({z}_{Sat}\right)}^{2}} exp \left(\frac{- 2 {r}^{2}}{w {\left({z}_{Sat}\right)}^{2}}\right) dr} = \\ = \frac{w \left(z_Sat\right)}{w \left(z\right)} ∗ \frac{erf \left(\frac{\sqrt{2} {r}_{A}}{w \left(z\right)}\right)}{erf \left(\frac{\sqrt{2} {r}_{Sat}}{w \left({z}_{Sat}\right)}\right)} ;\end{matrix}$

The expression U(z) therefore describes the proportion of the original laser beam that can be intercepted by the receiving antenna/detector of finite diameter of an attacker. Here, r_{A} denotes the radius of an attacker antenna or detector and r_{Sat} the radius of the receiving antenna or detector on the satellite of the legitimate receiver if the beam travels form the ground station to the satellite of the legitimate receiver. If the beam travels from the legitimate satellite to the legitimate ground station then r_{Sat} denotes the radius of the receiving antenna or detector of the ground station, respectively.

In addition to the size of the attacker and legitimate receiving antenna, the bandwidth of the signal and the effective system temperature also play a role regarding the respective SNR outcome. The effective system temperature can be made up of the temperature of the transmitter, the receiver and/or the transmission path.

Since it is sufficient to consider the quotient of the attacker's SNR and the legitimate recipient's SNR to verify the system security, the following expression results: $SNR \left(attacker\right) / SNR \left(receiver\right) = U \left(z\right) {{T}_{sys}}^{E} / {{T}_{sys}}^{A} ;$ where the system temperatures describe the temperatures of the attacker (index A) and the legitimate receiver (index E). The bandwidth is identical, so that this is shortened.

The entire system can therefore be protected with a PLS security technique, provided that $U \left(z\right) {{T}_{sys}}^{E} / {{T}_{sys}}^{A} < 1$ which means that the attacker has "more" noise than the legitimate receiver.

Three attack scenarios are discussed below in different embodiments. It is also possible that in some embodiments mixed scenarios are possible:
i) Downlink: laser based Data transmission from satellite to ground station;
ii) Sidelink: laser based data transmission from satellite to satellite;
iii) uplink: laser based data transmission from ground station to satellite;
iv) High Altitude Platform (HAP) attack scenario;
v) indirect attacks on the laser-based communication system;

It is assumed that the detection means of the attacker can be a (spy) satellite, a (spy) drone and/or an earth-bound antenna. The detection means of the attacker is mainly being characterized by its system temperature and/or the size of its detection unit, for example the size of its antenna. Furthermore, in the following embodiments, it is being assumed that the laser beam that carries the data is a TEM₀₀ mode Gaussian laser beam. However, the person skilled in the art knows how to recalculate the following findings with laser beams of different beam properties, in particular different TEM modes. In particular the following calculations assume an IR laser with an aperture of w₀ = 10cm. Furthermore, we assume an altitude of the legitimate satellite of z=400 km. On the ground level T_{sys} of 340 K can be assumed. At an altitude of 400 km a temperature T_{sys} of 1700 K can be assumed.

### i) Downlink: Data transmission from satellite to ground station - attack scenario in which the attacker uses the drone:

As an attack scenario, we consider a drone that flies through the laser beam sent from the satellite to the ground station at an altitude of about 100m or is able to follow the laser beam in order to receive the data transmission.

It can be assumed that the attacker drone can carry a parabolic antenna with a diameter of 5 - 10 cm (without attracting attention if the drone is being watched).

The legitimate receiver, the ground station, is estimated to have a parabolic antenna with a diameter of 1 m.

The temperature of the transmitting antenna of the satellite can be considered to be the same temperature independent from the case if the attacker drone or the ground station receives the downlink. Due to the low flight altitude of the drone compared to the satellite orbit, the detector temperatures and the effective temperature of the transmission path can be regarded as being identical. Hence, formula 2 is simplified to: $SNR \left(attacker\right) / SNR \left(receiver\right) = U \left(z\right) < 1 .$

At an altitude of the satellite of z=400 km, the ratio of the SNR values for an attack antenna with a diameter of 5 cm is SNR(Attacker)_{5cm} / SNR(Receiver) = U_{5cm} (400 km) = 0.068 = 6.8%;

At an altitude of the satellite of z=400 km, the ratio of the SNR values for an attack antenna with a diameter of 10 cm is SNR(Attacker)_{10cm} / SNR(Receiver) = U_{10cm} (400,000) = 0.14 = 14.4%;

Conclusion: Physical layer encoding can protect the communication of a laser-based satellite system in the downlink from terrestrial attackers. Additional protective measures may not be necessary. It can be assumed that the capacity of the physical channel is reduced by at least 7 or 14% by injecting additional noise.

### iia) Sidelink: laser based data transmission from satellite to satellite - attack scenario in which a spy satellite is below the legitimate satellite:

A spy satellite is able to get a better receiving conditions the closer it gets to the transmitter. One conceivable attack would be a spy satellite attempting to position itself below the legitimate satellite.

As a note: An attack of this kind could only be carried out for a very short time, as two bodies on different orbits circle the Earth at different speeds. The attacker would therefore have to use a lot of propulsion resources to slow down its orbital speed while maintaining altitude. Such a continuous maneuver is only conceivable for a very short time. Nevertheless, it will be analyzed here.

Again U(z) T_{sys}^{E} / T_{sys}^{A} < 1 needs to be fulfilled. On the ground level T_{sys} of 340 K can be assumed. Due to the temperature T_{sys} of 1700 K at an altitude of 400km, the attacker has a channel that is a factor of 5 worse than the terrestrial receiver due to the temperature difference. On the other hand, the distance between the transmitter and the attacker detector is shorter, so that our estimate yields: U(z) / 5 < 1.

The calculation of U(z) is shown in Fig. 3, wherein r_{A} 10 cm. hence, the spy satellite should not be allowed to approach the legitimate closer than 54.5 km-

Fig. 3 shows that up to a height of approximately 54.5 km U(z) < 1 can be assumed hence a spy satellite below the LEO satellite should not be allowed to approach closer than 54.5 km. Earth-bound objects (drones, HAPs, zeppelins, weather balloons) will not be able to reach these heights, with the particular requirement of being able to maintain their position to within a few centimeters.

### iib) Sidelink: spy satellite in the sidelink:

In this attack scenario, a spy satellite attempts to approach the communications satellite and holds a small parabolic antenna in the communications laser.

The size of the parabolic antennas is analogous to the i) downlink example above. Both antennas detect the same background radiation of 3K, so the temperature dependence can be neglected.

The distance between legitimate satellites in a typical constellation is approximately 550 km [satellite distances]. To determine the maximum permitted approach of a spy satellite to the transmitter, the ratio of the beam caustic received by an attacker with an antenna radius r_{A} to a satellite receiver with an antenna radius r_{Sat} is calculated on the basis of Formula 1. This expression can be analyzed graphically. If it is required that [Formula 2] fullfils $\frac{C / {N}_{A}}{C / {N}_{Sat}} = U \left(z\right) < ! 1 ,$ the maximum distance z that the attacker may approach in order not to breach the security of the procedure can be calculated. For the assumed values, this results in a critical distance of 130 km.

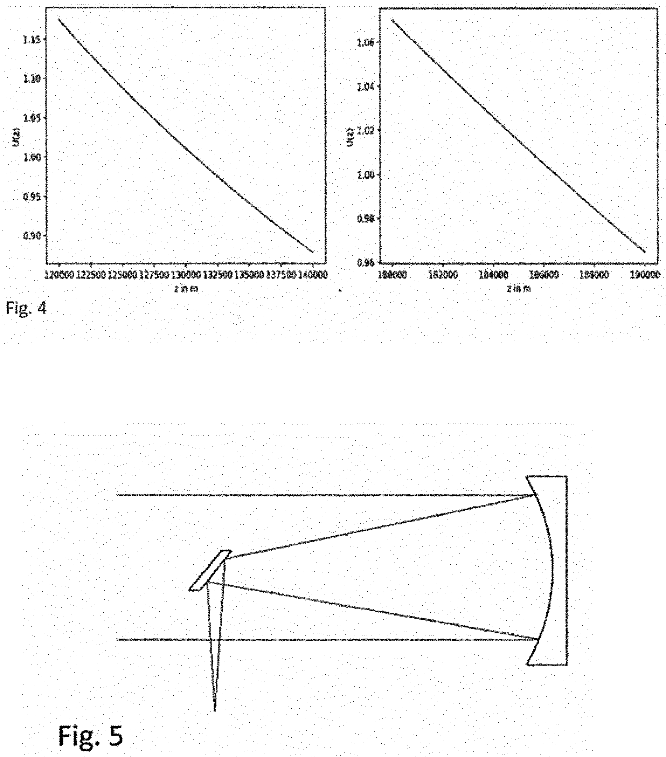

Figure 4: Ratio of the signal-to-noise ratio of an attacker in the sidelink as a function of the distance z to the transmitting satellite. Fig. 4, left: 5 cm diameter of the attacker antenna. Fig. 4, right: 10 cm diameter of the attacker antenna. Communication can be securely coded as long as the ratio is less than 1. The spy satellite may therefore fly up to a maximum of 130km (left) or 186km (right) from the transmitter and must keep its antenna in the center of the laser beam.

This means that the attacker must be able to close approx. 130 km (5cm aperture) or 186 km (10cm aperture) to the transmitter in order to receive a usable signal.

Conclusion: Physical layer encoding protects the digital communication of a laser-based satellite system in the sidelink, provided it can be ensured that no attacker can get into the immediate vicinity of the transmitting satellite. If an approach is nevertheless successful, only communication in one direction is vulnerable - while the return direction remains protected.

### iiia) Uplink: Attacking drone scenario

The size of the parabolic antennas is analogous to the downlink example above. The temperature of the receiver (1700 K legitimate satellite vs. 300 K attacking drone) and the longer distance and thus the higher equivalent noise temperature of the satellite favor the attacker here.

If the temperature effects are ignored, the SNR ratio is already 10.3 - and the method cannot be rated as safe.

Conclusion: Physical layer encoding alone does not protect the digital communication of a laser-based satellite system in the uplink. Additional protective measures would be necessary.

### iiib) Uplink: Attacking drone scenario with Newton optics used by the legitimate transmitter

However, if the beam width of the legitimate transmitter is widened using Newtonian beam optics, beam widths of up to one meter aperture can be achieved. Newtonian optics are known from telescope optics and are shown exemplary in Fig. 5. Fig. 5 shows Newtonian beam optics. The transmitter is at the location of the eyepiece (bottom), the output after the large secondary mirror. The beam optics are used in the opposite direction, i.e. the laser beam is expanded.

In this case, a drone that can only safely and stably carry or align a maximum 10 cm parabolic antenna can only capture a fraction of the beam acoustics and therefore has a worse SNR than the legitimate satellite receiver. It should be noted that due to the Raleigh length of 2950km, the laser beam runs virtually parallel between the transmitter and satellite receiver.

Conclusion: By using Newtonian or analog beam optics to expand the laser beam at the transmitter, a transmitter aperture can be created that cannot be completely intercepted by a drone-based attacker. Therefore, in this case, physical layer encoding alone protects the digital communication of a laser-based satellite system in the uplink. Additional protective measures would not be necessary here.

### iv) High Altitude Platform (HAP) attack scenario:

A High Altitude Platform, being stationary, only poses a significant threat on the horizon and could intercept traffic for a few seconds as long as the HAP is on the line of communication between the satellite and the ground station. As the position of HAPs will be known, they can be ignored or easily compensated as a source of danger.

### v) Indirect attacks on the laser-based communication system:

Scattering or reflections from the atmosphere play a role with infrared lasers. However, the SNR of an illegitimate receiver is so poor in this case that PLS provides reliable protection against these scenarios. The same reasoning applies to optical diffraction effects and weather phenomena such as clouds, rain or storms.

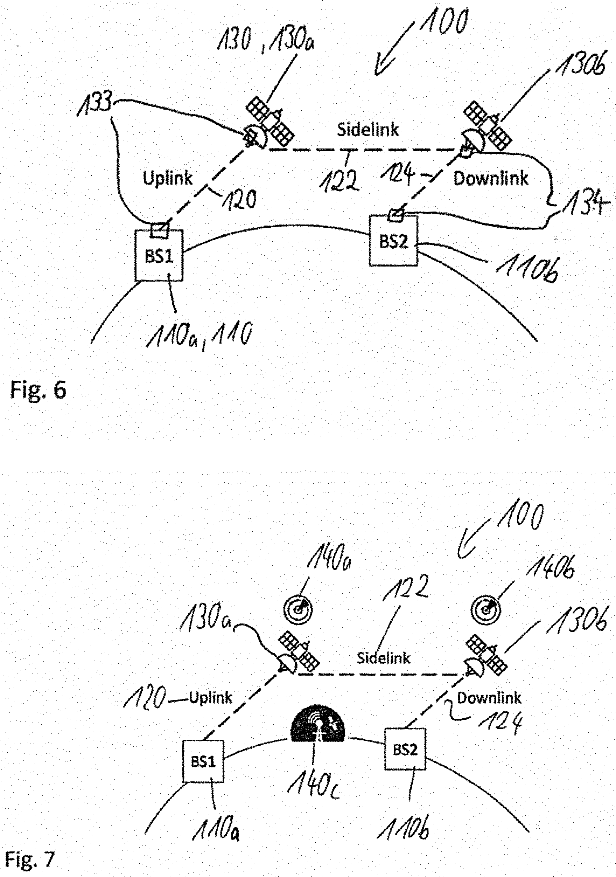

Fig. 6 shows an embodiment of the communication system according to the invention. It shows a laser-based satellite communication system 100 protected by Physical Layer Security (PLS).

It shows a first ground station 110a - also named BS1 - that sends an uplink signal 120 a first satellite 130a, wherein the first satellite 130a sends a sidelink signal 122 to a second satellite 130b, wherein the second satellite 130b sends a downlink signal 124 to a second ground station 110b - also named BS2. The sending unit 110, 130 - in particular the ground station 110 and/or the satellite 130 comprise a laser unit 133 to produce the laser signal x 40. The laser unit 133 can be an IR laser with a wavelength of 1064 nm. Fig.6 also shows the detection means 133 of the sending unit 110, 130. The detection means 134 can be a radar means, the laser unit 133 or a further laser unit and/or an optical camera. The processing unit of the sending unit 110, 130 can apply encryption to the message m.

Since the downlink 124 can be fully protected by means of PLS, the second ground station 110b (BS2) can comprise of standard elements, i.e. a receiving antenna, a photodetector and decoding electronics to convert the light signals into electrical signals and digitize them. Then the PLS security code is extracted from the digitized data stream to decode the transmitted messages as shown in Fig. 1.

The sidelink 122 between the (legitimate) satellites 130 a,b is securely protected by PLS technique, provided that a spy satellite - that is not shown in Fig. 6 - can be prevented from coming within a few kilometers of a communications satellite. In any case, a single spy satellite can only come close enough to one of the satellites 130 a,b - so that at least one communication direction can always be protected by PLS technique.

That the spy satellite comes too close can be detected by actively monitoring the orbit in the immediate vicinity of a communications satellite, either by at least one of the (constellation) satellites 130 a,b having monitoring means 140a,b itself or by monitoring the orbit with at least one of the ground stations 110a,b that have a monitoring means 140c as shown in Fig. 7. It is also possible to use special monitoring means that are not shown in Fig. 7. A possible technique to monitor the orbit is using radar means.

Due to the absence of interference from atmospheric effects, the shadowing that a spy antenna would cause can be detected in space as the drop in the level of the signal that is being received by one of the satellites 130 a,b. For example, the shadowing can be of the order of $\frac{{r}_{A}^{2}}{{r}_{Sender}^{2}} = \frac{25}{100} = 25 %$ and should be detectable as a drop in the level of the received signal. For the sake of simplicity, it was assumed that the attacker covers the laser beam close to the transmitter, i.e. the area ratio of the transmitter antenna and the attacker antenna was calculated.

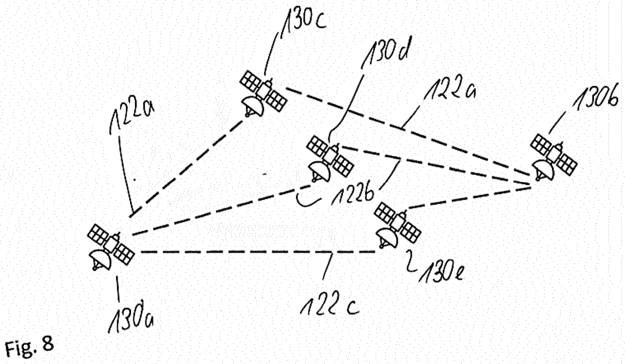

On the other hand, this risk of an attacking satellite spying on the direction of a sidelink can be reduced by using different sidelinks 122a,b,c in the satellite network as shown in Fig. 8. For example, if the first satellites 130a wants to send a message to the second satellite 130b this can be facilitated by first sending the message as the sidelink 122a to a third satellite 130c and from the third satellite 130c then finally to the second satellite 130b. Hence, it is being avoided to use the direct route between the first satellite 130a and the second satellite 130b. Hence, different and/or indirect data communication channels can be used. It is also possible to dynamically change the routing of the information and/or to split the messages into partial sidelink 122c,b messages, which are then sent via different routes over a fourth satellite 130d and/or fifth satellite 130e to the second satellite 130b.

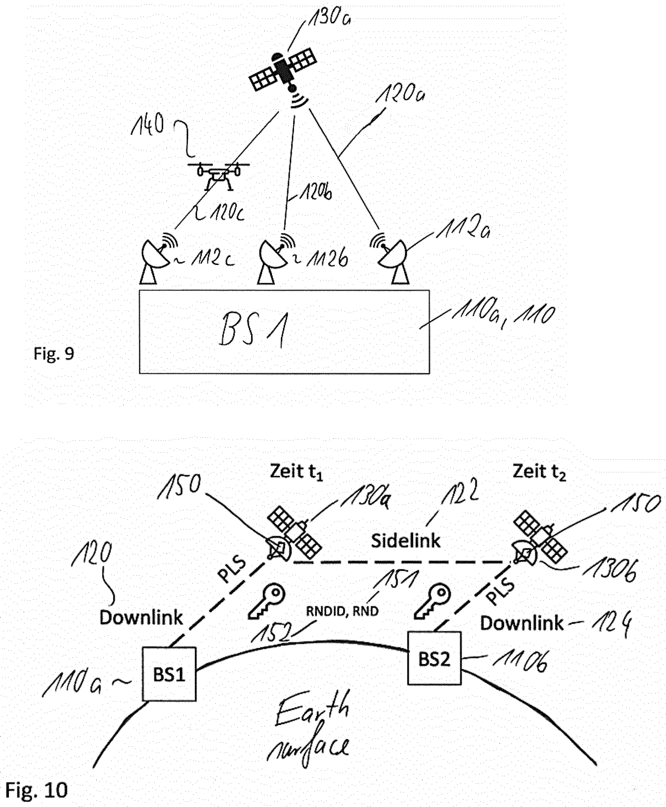

The uplink 120 needs to be specially secured, as PLS alone may not be sufficient to rule out a direct attack by an "omnipotent attacker". Various technologies can be used for this purpose:
1. Radar monitoring with monitoring means 140a,b,c of the (air-) space between the ground station 110a and satellite 130a to prevent unknown flying objects from remaining permanently in the corresponding (air-) space;
2. Decoys, i.e. laser beams of visible frequency that transmit an additional signal. The reflections of the signal can be evaluated and examined for reflections of possible flying objects;
3. Use of quantum-safe cryptography in addition to PLS;
4. Use of classical symmetric cryptography;
5. Use of special beam optics (Newton) on the transmitter to generate a particularly wide beam aperture. In this case, the receiving antenna of the legitimate receiver would have to have an analog dimension. The beam aperture can be more than 1 m, in particular even more than 2 m.
6. The security of transmissions from a transmitting ground station can be significantly increased using a path-diversified arrangement is shown in Fig. 9. Fig. 9 shows that the ground station 110a has more than one transceiver entity 112a-c, in particular three antennas 112a-c, to communicate with the satellite 130a. The transceiver entities 112a-c are placed at different so that their communication links 120a-c, to the satellite 130a, in particular the uplinks 120a-c, are separated in a way that a spy drone 140 can only intercept the communication of one of those communication links 120a-c at once. It is even possible to send the message - as already explained above - as partial messages over the different communication links 120a-c. in a possible embodiment the transceiver entities 112a-c can be arranged in the form of a triangle having a side length of more than 10 m, in particular more than 25 m or even more than 50 m. Each transmission is protected by PLS. If the laser beams near the ground are further apart than their beam acoustics, they do not overlap. This means that a drone cannot monitor all laser beams and therefore all transmissions simultaneously. A large number of drones 140 or spy devices would be required to successfully attack this separated arrangement. While the unnoticed operation of a drone is already unlikely, the unnoticed operation of a swarm of drones in the vicinity of a ground station is unrealistic. The messages, which are divided into IP packets as illustrated in Fig. 8 as partial messages, can also be distributed over more than one communication link, in particular the three links shown in Fig. 8, so that the drone 140 cannot pick up any coherent message parts.

It is one advantage of the invention that it is agnostici regarding the network technique, i.e. it can be easily integrated into any transmission type, wherein the embodiments claimed within the context of this invention are mainly based on laser-based satellite communication. The invention is especially beneficial for laser-based communication as the parameters of the laser beam can be calculated and shaped very efficiently.

In order to adjust the apertures of the transmitter and/or receiver with respect to different network techniques, additional optics may be required for the transmitter (e.g. a Newtonian optic for beam expansion) and parabolic antennas with very good gain including controlled optimum alignment.

### End-to-end security aspects:

As the PLS method presented shows its strengths particularly in the downlink 124 and sidelink 122, the distribution of information within the satellite constellation and to the user can be easily secured. The PLS code should be adapted to the C/N values for the downlink 124 (SNR=0.16) in order to automatically ensure the distribution of information to the user. Hence, a preferred target value for the downlink is having a SNR of 0.16.

Knowing that the PLS coding may not adequately protect the uplink 120 to the satellite constellation, additional precautionary measures can be taken here. It can be assumed that the satellite constellation is monitored, as it is a critical infrastructure. In the event of an attack, the communication satellites could be maneuvered or different communication paths within the constellation could be used. A potentially compromised satellite-satellite link could then only be used in the downlink 124 communication direction.

### Multihop scenario:

In this scenario, the entire route (uplink 120, sidelink(s) 122, downlink 124) can be provided with a single PLS code. The PLS code should be designed in such a way that the downlink in particular is adequately protected. If the PLS code is already encoded by the transmitting ground station 110, the communication satellites 130 can forward the messages according to their routing protocol. It would not be necessary to decode or re-encode the information, which would have a positive effect on the energy budget of the communication satellites 140. This is also the case if additionally encryption techniques are applied to the data packets. Hence, in this case the message can be made up of two different parts, namely the target address and the payload. The payload can be encrypted with PLS and/or encryption techniques but the target address shall remain readable so that there is no need for the satellites 130 to encrypt the target address so that it can simply route the message according to the routing protocol from a sending ground station110a to a receiving ground station 110b, wherein the receiving ground station 110b can then decrypt the payload according to encryption and/or PLS schemes. This has a positive effect on the energy budget of the communication satellites 140.

### Distribution of entropy for the seed of the process:

The entropy for providing the spatially distributed seed is distributed using the method already described in the European patent application with a number 22209986.

In the multihop-scenario, it is possible that only the ground stations 110 share the seed. The seed can be distributed secretly in order to increase the security of the procedure - either via an encryption procedure or by extrapolating the distributed randomness using a secret mathematical function (congruence generator, etc.).

### Separate protection of the hops:

In this embodiment, each section (uplink 120, sidelink(s) 122, downlink 124) can be secured separately with the PLS technique and/or with different PLS codes. In this case, the seed would also have to be distributed to all hops and/or nodes involved, i.e. ground stations 110 and satellites 130. Separately secured hops would have the advantage of better and adapted resource utilization (bandwidth, seed) of the communication link depending on the current situation and threat level. However, separate hops require active re-encoding of the messages in the satellite with the corresponding energy and computing capacity requirements.

Possible application scenarios of the invention, wherein the invention is not limited to the following listed application scenarios:
- Secure broadband internet from Europe to the world: In Europe, the airspace above the ground stations is very well controlled and exclusion zones can be enforced. As soon as the information has been sent securely to the satellites (excluding spy drones), it can be distributed securely worldwide;
   ∘ Information to embassies
   ∘ Information to military units
   ∘ Information for companies operating abroad
- With the help of path diversification, the uplink could also be adequately protected and a secure return channel could be realized;
- Alternative network to ground-based networks, i.e.
   ∘ Natural disaster-proof, against disasters on earth;
   ∘ Tamper-proof, or can only be manipulated with great effort (attack on a satellite system);
   ∘ under local (European) control;
- Since the PLS-secured downlink of a laser-based communication system can be considered secure against terrestrial attackers of any kind, this provides an alternative to QKD satellite systems; due to their quantum mechanical nature, QKD satellite systems are very complex, expensive and prone to errors.

### PLS key exchange system:

Hence, classic laser signals (e.g. a 100Gbit / sec link) can be securely transmitted in the downlink with the help of PLS and unconditionally protected from terrestrial attackers.

The transmission of random numbers from the satellite to a terrestrial receiver can also be protected in this way.

A quantum random number generator (QRNG) 150, which is installed in a satellite, serves as an entropy source. The random numbers generated are then sent from the satellite to the terrestrial receivers via a PLS-secured laser link. The entire bandwidth of the laser link can be used for this purpose, resulting in key rates of up to 100 Gbit/s (as opposed to Mbit/s with QKD systems). The transmitted random numbers are converted into cryptographic keys by the ground station using a key derivation function (KDF) and (optionally) a pre-distributed PSK. This is illustrated in Fig. 10 that shows that at least one satellite 130a sends identical random numbers 151 to the ground stations 110a and 110b via a PLS-secured channel, wherein the aforementioned laser-based communication means can be used to transmit the random numbers 151. The ground stations 110a,b can use these random numbers 151 directly as cryptographic keys or can create the cryptographic keys by using the random numbers 151. To synchronize the same key, an additional, public RND ID 152 of the random number 151 can be used. After exchanging the public RND ID 152, ground stations 110a,b can use the same random number 151 as a cryptographic key and use it for symmetric encryption of the user data. The satellites 110 can share the random numbers 151 and/or the public RND ID 152 amongst each other by using a PLS secured sidelink 122.

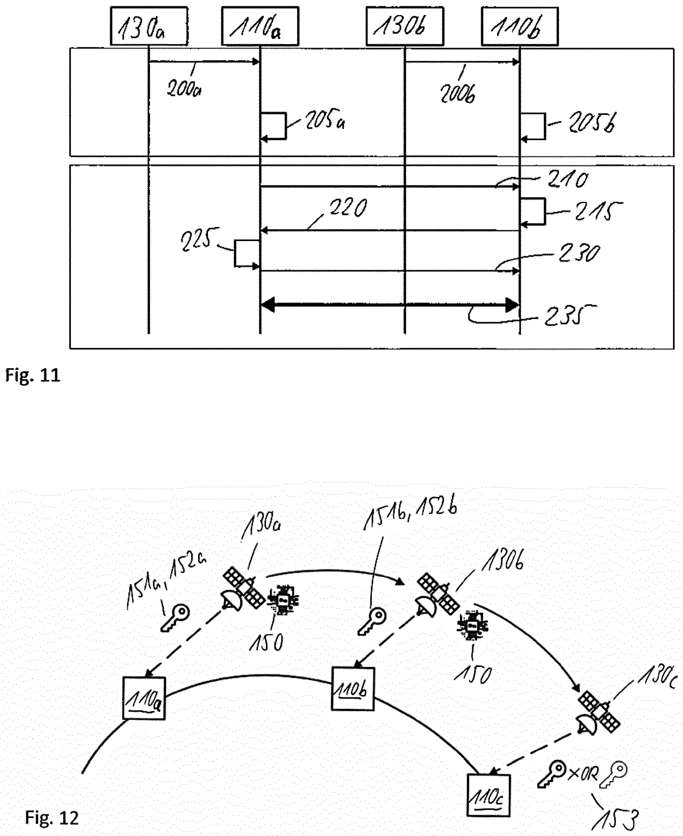

Fig. 11 illustrates this distribution of random numbers in the communication system 100.

In step 200a at the time point t = t₁, the first satellite 130a sends random numbers 151 along with the public RND ID 152 to the first ground station 110a via a downlink 124 that is being secured with PLS techniques, wherein the first ground station 110a stores the random numbers 151 along with the public RND ID 152 inside a (secure) memory entity in step 205a.

In step 200b at the time point t = t₂ - wherein t₂ can be a different time point or being the same time point as t₁ - the second satellite 130b sends the same random numbers 151 along with the public RND ID 152 to the second ground station 110b via a downlink 124 that is being secured with PLS techniques, wherein the second ground station 110b stores the random numbers 151 along with the public RND ID 152 inside a (secure) memory entity in step 205b.

In step 210, the first ground station 110a sends a communication request to the second ground station 110b. To establish a quantum safe communication for the user data, the second ground station 110b stores in step 215 any of the random numbers RND 151 along with the associated identifier RND ID 152 of this random number and sends the RND ID 152 in step 220 the first ground station 110a, in particular via a public channel. In step 225, the first ground station 110a loads the random number 151 that matches to the provided RND ID 152 from its local memory. In step 230, the first ground station 110a can send an "OK" message to the second ground station 110b. In the following step 235, the two ground stations 110a,b can communicate encrypted with each other by using the RND 151 as a key for the quantum-safe, symmetric encryption, for example an AES encryption type.

Fig. 12 illustrates another embodiment of distribution of random numbers according to an aspect of the invention. The first satellite 130a sends a first set comprising a first random number (RND1) 151a, and a first RND ID 152a to the first ground station 110a. The second satellite 130b sends a second set comprising a second random number (RND2) 151b, and a second RND ID 152b to the second ground station 110b. In particular, the first and the second random numbers 151a,b are different from each other and/or the first and the second RND ID 152a,b are different from each other. A third ground station 110c receives the identifier RND ID 152a and RND ID 152b as well as the bitwise XOR multiplied random numbers "RND1 XOR RND2" 153 via an unsecured channel. The satellites 110a-c can share the random numbers 151 and/or the public RND ID 152 amongst each other by using a PLS secured sidelink 122.

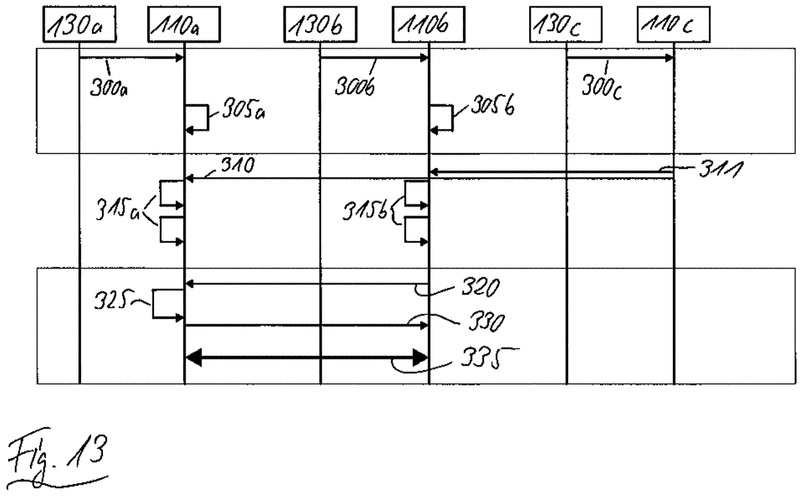

Fig. 13 shows a method how to distribute random numbers according to Fig. 12.

In step 300a at the time point t = t₁, the first satellite 130a sends first random numbers 151a along with first public RND ID 152a to the first ground station 110a via a downlink 124 that is being secured with PLS techniques, wherein the first ground station 110a stores the first random numbers (RND1) 151a along with the first public RND ID 152a inside a (secure) memory entity in step 305a.

In step 300b at the time point t = t₂ - wherein t₂ can be a different time point or being the same time point as t₁ - the second satellite 130b sends second random numbers (RND2) 151b along with second public RND ID 152b to the second ground station 110b via a downlink 124 that is being secured with PLS techniques, wherein the second ground station 110b stores the second random numbers 151b along with the second public RND ID 152b inside a (secure) memory entity in step 305b.

In step 300c at the time point t = t₃ - wherein t₃ can be a different time point or being the same time point as t₁ - the third satellite 130c sends the first and the second public RND ID 152a, b to the third ground station 110c along with a bitwise XOR multiplied random number "RND1 XOR RND2" 153. The downlink from the third satellite 130c to the third ground station 110c needs not to be a secure channel. This data is then sent from the third ground station 110c to the first ground station 110a in step 310 and/or to the second ground station 110b in steps 310 in step 311.

In step 315a, the first ground station 110a can then calculate the second random number RND2 151b that was exchanged between the satellite and second ground station 110b with a further bitwise XOR multiplication of its random number RND1 151a with the product RND1 XOR RND2, since RND2 = RND1 XOR RND1 XOR RND2.

In an analog way, the second ground station 110b can calculate the random number RND1 151a.

In step 320, the second ground station 110b can send the RND ID 152b to the first ground station 110a, wherein the first ground station 110a loads the random number that matches to this RND ID 152b in step 325. In step 330, the first ground station 110a can send an "OK" message to the second ground station 110b.

In step 335, the first ground station and the second ground station 110a,b can communicate with each other by either using RND1 or RND2 in the quantum-safe symmetric encryption technique.

If a seed S is used by the PLS protocols, the same seed S must be distributed between the satellite 130 and the ground station 110. In the setup shown in Fig. 10 or Fig. 12, the seed S can also be generated by the QRNG module 150 on the satellite 130. The seed S can simply be transmitted from the satellite 130 to the ground station 110 via a channel of the laser communication system. As the seed S can also be publicly accessible, this transmission does not need to be specially protected. The seed can be continuously exchanged with the ground stations 110 each time the satellite 130 orbits - unused channel capacity can be used for this purpose.

In the following, possible advantages of the invention are listed below, wherein the invention might provide even more advantages:
∘ PLS is information-theoretically secure as long as the SNR of an attacker is worse than that of a legitimate recipient;
∘ Supplements the cryptographic encryption of messages with an independent security vector;
∘ End-to-end (with special control of the uplink);
∘ The security of the downlink is the most difficult to control, as these locations may be outside high-security areas (embassies, military facilities abroad, companies abroad); these places may be located in **politically** unstable regions; the number of download points in a satellite network is generally greater than the number of uplinks;
∘ Entropy distribution via classic networks possible (secret, encrypted or open) for seed distribution. The seed may, but does not have to be public. A secret seed is better than a public seed;
∘ Resilient security procedure, which can be exploited by dynamically adapting the seed or seed lengths in the code;
∘ This invention is aimed at the possibility of securing the ESA project "Hydron" / "Fibre in the Sky";
∘ "cheap" solution;
∘ Can be integrated into the concepts for 6G and quantum security in 5G/6G networks;
∘ Protects laser-based satellite communication from loss of information due to scattering, diffraction or atmospheric influences. Protects the downlink even in the event of direct spying of the laser beam;
∘ Path diversification across different paths of a constellation enables a significant increase in the security of sidelink attacks;
∘ Alternative to quantum optical QKD satellite systems, which are expensive, less resilient and very sensitive;

### References:

- https://de.wikipedia.org/wiki/Signal-Rausch-Verhältnis;
- https://www.everythingrf.com/rf-calculators/parabolic-reflector-antenna-gain;
- https://www.bernd-leitenberger.de/blog/2017/01/23/lohnt-sich-laserkommunikation-im-all/;
- Giggenbach, Dirk & Perlot, Nicolas. (2006). Data ride on the laser beam:The KIODO experiment - testing an optical satellite downlink. DLR News 116. 10-13;
- https://www.planet-wissen.de/natur/klima/erdatmosphaere/pwieaufbaudererdatmosp haere100.html#:~:text=This%20is%20the%20area%2C%20in, but %20does%20not%20apply%20here%20anym ore;
- https://www.elektroniknet.de/messen-testen/analysatoren/auf-11-pikometer-genau-regeln.195352.html;
- https://www.iac.es/en/observatorios-de-canarias/telescopes-and-experiments/optical-ground-station;
- M. Bloch, M. Hayashi and A. Thangaraj, "Error-control coding for physical-layer secrecy," Proc. IEEE, vol. 103, no. 10, pp. 1725-1746, 2015;
- https://t3n.de/news/starlink-satelliten-internet-spacex-musk-1272753/#:~:text=The%20Starlink%2DSatellites%20fly%20at,curr ently%20at%20550%20kilometers%20distance;
- https://en.wikipedia.org/wiki/Error_function;
- European patent application EP 22209986;

## Claims

1. A sending unit (110, 130) for enhancing a security level of a communication message m that is used in a satellite-based communication system, wherein the sending unit (110, 130) is configured to send the message m to a receiving unit (110, 130) over a communication path T (45, 120, 122, 124), wherein a PLS-component of the sending unit (110, 130) adds noise of a level N_{Art} to the message m (215) to transform it to a communication signal x (40), wherein the sending unit is configured to send the communication signal x (40) as a laser signal x (40),
**characterized in that**
the noise is artificial and its level N_{Art} is designed to make the message m unreadable for an eavesdropper (90, 140) that has a worse signal-to-noise ratio than a legitimate receiving unit (110, 130),
wherein the artificial noise level N_{Art} is determined such that the condition $U \left(z\right) {{T}_{sys}}^{E} / {{T}_{sys}}^{A} < 1$
is fulfilled, whereby
U(z) is a measure of uncertainty
T_{sys}^{E} is the system noise temperature of the legitimate receiver (index E) and
T_{sys}^{A} is the system noise temperature of the attacker (index A)
and wherein the sending unit (110, 130) is further configured to adapt the aperture of the laser beam, whereby the aperture of the laser beam is more than 1 meter.

2. A sending unit (110, 130) of claim 1, wherein the sending unit (110, 130) is a satellite (130) or a ground station (110), wherein the satellite (130a) is configured to communicate with a further satellite (130b) and/or wherein the ground station (130a) is configured to communicate with a further ground station (130b) and/or wherein the satellite (130a) is configured to communicate with the ground station (110) and vice versa.

3. The sending unit (110, 130) of any of the claims 1 to 2, wherein the communication path is a line-of-sight communication path.

4. The sending unit (110, 130) of any of the claims 1 to 3, wherein the sending unit (110, 130) is configured to send at least one partial communication signal x' directly to a receiving unit (110, 130) and/or to a forwarding unit that forwards the at least one partial communication signal x' to the receiving unit (110, 130), wherein the partial communication signals x' make up the communication signal x.

5. The sending unit (110, 130) of claim 4, wherein antennas of the sending unit are spatially separated, in particular by more than 10 meters, so that the partial communication signals x' are send over spatially separated communication paths T (120) so that a single spy drone, in particular with an antenna size of less than 1 meter, cannot intercept all the partial communication signals x' simultaneously.

6. The sending unit (110, 130) of any of the claims, wherein the sending unit (110, 130) is configured to encrypt the message m.

7. The sending unit (110, 130) of any of the claims, wherein the sending unit (110, 130) comprises and/or is associated to detection means (134), wherein the detection means (134) is configured to detect a spy drone and/or a spy satellite, in particular within the line-of-sight of the communication path.

8. The sending unit (110, 130) of claim 7, wherein the sending unit (110, 130) triggers counter measurements if a spy drone and/are a spy satellite is being detected, wherein the counter measurements are:
• stopping the sending of the communication signal x,
• delaying the sending of the communication signal x,
• encrypting the message m with encryption means,
• triggering a position change of the sending unit and/or the receiving unit, and/or
• sending the communication signal x as partial communication signals x' over separated communication paths T.

9. The sending unit (130) of claim 1, wherein the sending unit (130) is a satellite (130), wherein the satellite (130) comprises a random-number generator (150), in particular a quantum random number generator (QRNG, 150), that is configured to create random numbers (151) along with a public identifier (RND ID 152), wherein at least the random numbers (151) are part of a message m, wherein the at least one satellite (130) is configured to send the message m to a ground station (110) via a communication path T (45, 120, 122, 124).

10. A method to enhance a security level of a communication message m, in particular in a satellite-based communication system, comprising the following steps:
• Providing a communication message to a sending unit of claim 1;
• Adding artificial noise of a level N_{Art} to the message m (215) to transform it to a communication signal x (40), wherein the level N_{Art} is designed to make the message m unreadable for an eavesdropper (90, 140) that has a worse signal-to-noise ratio than a legitimate receiving unit (110, 130);
• Using a laser unit (133) to send the communication signal x (40) as a laser signal (40).

11. Laser signal x to enhance a security level of a communication message m in a satellite-based communication system, wherein the Laser signal x (10) is obtainable by the method according to claim 10.

12. A receiving unit (110, 130) for the communication in a satellite-based communication system designed for enhancing a security level of a communication message m, wherein the receiving unit (110, 130) is configured to receive and process a laser signal x (40) according to claim 11 received over the communication path T (45, 120, 122, 124).

13. The receiving unit (110, 130) of claim 12, wherein the receiving unit (110) is a first ground station (110) that receives random numbers (151) transmitted via a laser signal x (40) of claim 11 and that receives corresponding RND ID (152), in particular also as part of the laser signal x (40), wherein the ground station (110a) communicates with a second ground station (110b) based on the RND ID (152) to use the same random numbers (151) as a basis to generate the cryptographic key.

14. A satellite-based communication system (100) for enhancing a security level of the communication message m, wherein the satellite-based communication system (100) comprises a sending unit of claim 1, a receiving unit of claim 11 and is configured to execute the method according to claim 10.

## Patentansprüche

1. Sendeeinheit (110, 130) zur Verbesserung eines Sicherheitsniveaus einer Kommunikationsnachricht m, die in einem satellitengestützten Kommunikationssystem verwendet wird,
wobei die Sendeeinheit (110, 130) dazu eingerichtet ist, die Nachricht m an eine Empfangseinheit (110, 130) über einen Kommunikationspfad T (45, 120, 122, 124) zu senden;
wobei eine PLS-Komponente der Sendeeinheit (110, 130) der Nachricht m (215) ein Rauschen eines Pegels N_{Art} hinzufügt, um diese in ein Kommunikationssignal x (40) umzuwandeln,
wobei die Sendeeinheit dazu eingerichtet ist, das Kommunikationssignal x (40) als ein Lasersignal x (40) zu senden,
**dadurch gekennzeichnet, dass**
das Rauschen künstlich ist und sein Pegel N_{Art} dazu ausgelegt ist, die Nachricht m für einen Abhörer (90, 140) unlesbar zu machen, der ein schlechteres Signal-Rausch-Verhältnis als eine legitime Empfangseinheit (110, 130) aufweist,
wobei der künstliche Rauschpegel N_{Art} so bestimmt wird, dass die Bedingung $U \left(z\right) {{T}_{sys}}^{E} / {{T}_{sys}}^{A} < 1$
erfüllt ist, wobei
U(z) ein Maß für die Unsicherheit ist
T_{sys}^{E} die Systemrauschtemperatur des legitimen Empfängers (Index E) ist und
T_{sys}^{A} die Systemrauschtemperatur des Angreifers (Index A) ist
und wobei die Sendeeinheit (110, 130) ferner dazu eingerichtet ist, die Apertur des Laserstrahls anzupassen, wobei die Apertur des Laserstrahls mehr als 1 Meter beträgt.

2. Sendeeinheit (110, 130) nach Anspruch 1, wobei die Sendeeinheit (110, 130) ein Satellit (130) oder eine Bodenstation (110) ist, wobei der Satellit (130a) dazu eingerichtet ist, mit einem weiteren Satelliten (130b) zu kommunizieren und/oder wobei die Bodenstation (130a) dazu eingerichtet ist, mit einer weiteren Bodenstation (130b) zu kommunizieren und/oder wobei der Satellit (130a) dazu eingerichtet ist, mit der Bodenstation (110) zu kommunizieren und umgekehrt.

3. Sendeeinheit (110, 130) nach einem der Ansprüche 1 bis 2, wobei der Kommunikationspfad ein Kommunikationspfad mit Sichtverbindung ist.

4. Sendeeinheit (110, 130) nach einem der Ansprüche 1 bis 3, wobei die Sendeeinheit (110, 130) dazu eingerichtet ist, mindestens ein Teil-Kommunikationssignal x' direkt an eine Empfangseinheit (110, 130) und/oder an eine Weiterleitungseinheit zu senden, die das mindestens eine Teil-Kommunikationssignal x' an die Empfangseinheit (110, 130) weiterleitet, wobei die Teil-Kommunikationssignale x' das Kommunikationssignal x bilden.

5. Sendeeinheit (110, 130) nach Anspruch 4, wobei Antennen der Sendeeinheit räumlich getrennt sind, insbesondere um mehr als 10 Meter, sodass die Teil-Kommunikationssignale x' über räumlich getrennte Kommunikationspfade T (120) gesendet werden, sodass eine einzelne Spionagedrohne, insbesondere mit einer Antennengröße von weniger als 1 Meter, nicht alle Teil-Kommunikationssignale x' gleichzeitig abfangen kann.

6. Sendeeinheit (110, 130) nach einem der Ansprüche, wobei die Sendeeinheit (110, 130) dazu eingerichtet ist, die Nachricht m zu verschlüsseln.

7. Sendeeinheit (110, 130) nach einem der Ansprüche, wobei die Sendeeinheit (110, 130) Detektionsmittel (134) umfasst und/oder damit assoziiert ist, wobei die Detektionsmittel (134) dazu eingerichtet sind, eine Spionagedrohne und/oder einen Spionagesatelliten zu detektieren, insbesondere innerhalb der Sichtverbindung des Kommunikationspfads.

8. Sendeeinheit (110, 130) nach Anspruch 7, wobei die Sendeeinheit (110, 130) Gegenmaßnahmen auslöst, wenn eine Spionagedrohne und/oder ein Spionagesatellit detektiert wird, wobei die Gegenmaßnahmen sind:
• das Stoppen des Sendens des Kommunikationssignals x,
• das Verzögern des Sendens des Kommunikationssignals x,
• das Verschlüsseln der Nachricht m mit Verschlüsselungsmitteln,
• das Auslösen einer Positionsänderung der Sendeeinheit und/oder der Empfangseinheit, und/oder
• das Senden des Kommunikationssignals x als Teil-Kommunikationssignale x' über getrennte Kommunikationspfade T.

9. Sendeeinheit (130) nach Anspruch 1, wobei die Sendeeinheit (130) ein Satellit (130) ist, wobei der Satellit (130) einen Zufallszahlengenerator (150) umfasst, insbesondere einen Quanten-Zufallszahlengenerator (QRNG, 150), der dazu eingerichtet ist, Zufallszahlen (151) zusammen mit einer öffentlichen Kennung (RND ID 152) zu erzeugen, wobei zumindest die Zufallszahlen (151) Teil einer Nachricht m sind, wobei der mindestens eine Satellit (130) dazu eingerichtet ist, die Nachricht m über einen Kommunikationspfad T (45, 120, 122, 124) an eine Bodenstation (110) zu senden.

10. Verfahren zur Verbesserung eines Sicherheitsniveaus einer Kommunikationsnachricht m, insbesondere in einem satellitengestützten Kommunikationssystem, umfassend die folgenden Schritte:
• Bereitstellen einer Kommunikationsnachricht an eine Sendeeinheit nach Anspruch 1;
• Hinzufügen von künstlichem Rauschen eines Pegels N_{Art} zu der Nachricht m (215), um diese in ein Kommunikationssignal x (40) umzuwandeln, wobei der Pegel N_{Art} dazu ausgelegt ist, die Nachricht m für einen Abhörer (90, 140) unlesbar zu machen, der ein schlechteres Signal-Rausch-Verhältnis als eine legitime Empfangseinheit (110, 130) aufweist;
• Verwenden einer Lasereinheit (133), um das Kommunikationssignal x (40) als ein Lasersignal (40) zu senden.

11. Lasersignal x zur Verbesserung eines Sicherheitsniveaus einer Kommunikationsnachricht m in einem satellitengestützten Kommunikationssystem, wobei das Lasersignal x (10) durch das Verfahren nach Anspruch 10 erhältlich ist.

12. Empfangseinheit (110, 130) für die Kommunikation in einem satellitengestützten Kommunikationssystem, das zur Verbesserung eines Sicherheitsniveaus einer Kommunikationsnachricht m ausgelegt ist, wobei die Empfangseinheit (110, 130) dazu eingerichtet ist, ein über den Kommunikationspfad T (45, 120, 122, 124) empfangenes Lasersignal x (40) nach Anspruch 11 zu empfangen und zu verarbeiten.

13. Empfangseinheit (110, 130) nach Anspruch 12, wobei die Empfangseinheit (110) eine erste Bodenstation (110) ist, die über ein Lasersignal x (40) nach Anspruch 11 übertragene Zufallszahlen (151) empfängt und die eine entsprechende RND ID (152) empfängt, insbesondere ebenfalls als Teil des Lasersignals x (40), wobei die Bodenstation (110a) auf der Grundlage der RND ID (152) mit einer zweiten Bodenstation (110b) kommuniziert, um dieselben Zufallszahlen (151) als Grundlage zum Erzeugen des kryptografischen Schlüssels zu verwenden.

14. Satellitengestütztes Kommunikationssystem (100) zur Verbesserung eines Sicherheitsniveaus der Kommunikationsnachricht m, wobei das satellitengestützte Kommunikationssystem (100) eine Sendeeinheit nach Anspruch 1, eine Empfangseinheit nach Anspruch 11 umfasst und dazu eingerichtet ist, das Verfahren nach Anspruch 10 auszuführen.

## Revendications

1. Unité (110, 130) d'émission destinée à améliorer le niveau de sécurité d'un message m de communication, qui est utilisée dans un système de communication par satellite,
l'unité (110, 130) d'émission étant configurée pour envoyer le message m à une unité (110, 130) de réception sur un trajet T (45, 120, 122, 124) de communication ; un composant PLS de l'unité (110, 130) d'émission ajoutant du bruit d'un niveau N_{Art} au message m (215) pour le transformer en un signal x (40) de communication, l'unité d'émission étant configurée pour émettre le signal x (40) de communication sous la forme d'un signal laser x (40),
**caractérisé en ce que**
le bruit est artificiel et son niveau N_{Art} est conçu pour rendre le message m illisible pour un écouteur clandestin (90, 140) qui présente un rapport signal/bruit plus faible qu'une unité (110, 130) de réception légitime,
le niveau de bruit artificiel N_{Art} étant déterminé de telle sorte que la condition $U \left(z\right) {{T}_{sys}}^{E} / {{T}_{sys}}^{A} < 1$
soit remplie, en conséquence de quoi
U(z) est une mesure d'incertitude
T_{sys}^{E} est la température de bruit de système du récepteur légitime (indice E) et
T_{sys}^{A} est la température du bruit de système de l'attaquant (indice A)
et l'unité (110, 130) d'émission est en outre configurée pour adapter l'ouverture du faisceau laser, en conséquence de quoi l'ouverture du faisceau laser est supérieure à 1 mètre.

2. Unité (110, 130) d'émission selon la revendication 1, l'unité (110, 130) d'émission étant un satellite (130) ou une station terrestre (110), le satellite (130a) étant configuré pour communiquer avec un autre satellite (130b) et/ou la station terrestre (130a) étant configurée pour communiquer avec une autre station terrestre (130b) et/ou le satellite (130a) étant configuré pour communiquer avec la station terrestre (110) et vice versa.

3. Unité (110, 130) d'émission selon l'une quelconque des revendications 1 à 2, dans laquelle le trajet de communication étant un trajet de communication en visibilité directe.

4. Unité (110, 130) d'émission selon l'une quelconque des revendications 1 à 3, l'unité (110, 130) d'émission étant configurée pour envoyer au moins un signal de communication partiel x' directement à une unité (110, 130) de réception et/ou à une unité de transfert qui transfère le ou les signaux de communication partiels x' à l'unité (110, 130) de réception, les signaux de communication partiels x' constituant le signal x de communication.

5. Unité (110, 130) d'émission selon la revendication 4, les antennes de l'unité d'émission étant séparées spatialement, en particulier de plus de 10 mètres, de sorte que les signaux de communication partiels x' sont émis sur des trajets T de communication (120) séparés spatialement, de sorte qu'un seul drone espion, en particulier avec une taille d'antenne inférieure à 1 mètre, ne peut intercepter simultanément tous les signaux de communication partiels x'.

6. Unité (110, 130) d'émission selon l'une quelconque des revendications, l'unité (110, 130) d'émission étant configurée pour chiffrer le message m.

7. Unité (110, 130) d'émission selon l'une quelconque des revendications, l'unité (110, 130) d'émission comprenant et/ou étant associée à un moyen (134) de détection, le moyen (134) de détection étant configuré pour détecter un drone espion et/ou un satellite espion, en particulier dans la ligne de visée du trajet de communication.

8. Unité (110, 130) d'émission selon la revendication 7, l'unité (110, 130) d'émission déclenchant des contre-mesures si un drone espion et/ou un satellite espion sont détectés, les contre-mesures étant :
• l'arrêt de l'émission du signal x de communication,
• le fait de retarder l'émission du signal x de communication,
• le chiffrement du message m avec des moyens de chiffrement,
• le déclenchement d'un changement de position de l'unité d'émission et/ou de l'unité de réception, et/ou
• l'émission du signal x de communication sous forme de signaux de communication partiels x' sur des trajets T de communication séparés.

9. Unité (130) d'émission selon la revendication 1, l'unité (130) d'émission étant un satellite (130), le satellite (130) comprenant un générateur (150) de nombres aléatoires, en particulier un générateur quantique de nombres aléatoires (QRNG, 150), qui est configuré pour créer des nombres aléatoires (151) conjointement à un identifiant public (RND **ID** 152), au moins les nombres aléatoires (151) faisant partie d'un message m, le ou les satellites (130) étant configurés pour envoyer le message m à une station terrestre (110) via un trajet T (45, 120, 122, 124) de communication.

10. Procédé d'amélioration du niveau de sécurité d'un message m de communication, en particulier dans un système de communication par satellite, comprenant les étapes suivantes :
• Fourniture d'un message de communication à une unité d'émission selon la revendication 1 ;
• Ajout d'un bruit artificiel de niveau N_{Art} au message m (215) pour le transformer en un signal x (40) de communication, le niveau N_{Art} étant conçu pour rendre le message m illisible pour un écouteur clandestin (90, 140) qui présente un rapport signal sur bruit plus faible qu'une unité (110, 130) de réception légitime ;
• Utilisation d'une unité laser (133) pour émettre le signal x (40) de communication sous forme de signal laser (40).

11. Signal laser x destiné à améliorer un niveau de sécurité d'un message m de communication dans un système de communication par satellite, le signal laser x (10) pouvant être obtenu par le procédé selon la revendication 10.

12. Unité (110, 130) de réception pour la communication dans un système de communication par satellite conçu pour améliorer un niveau de sécurité d'un message m de communication, l'unité (110, 130) de réception étant configurée pour recevoir et traiter un signal laser x (40) selon la revendication 11 reçu sur le trajet T (45, 120, 122, 124) de communication.

13. Unité (110, 130) de réception selon la revendication 12, l'unité de réception (110) étant une première station terrestre (110) qui reçoit des nombres aléatoires (151) transmis par l'intermédiaire d'un signal laser x (40) selon la revendication 11 et qui reçoit un RND **ID** (152) correspondant, en particulier également en tant que partie du signal laser x (40), la station terrestre (110a) communiquant avec une seconde station terrestre (110b) sur la base du RND **ID** (152) pour utiliser les mêmes nombres aléatoires (151) comme base pour générer la clé cryptographique.

14. Système (100) de communication par satellite pour améliorer un niveau de sécurité du message m de communication, le système (100) de communication par satellite comprenant une unité d'émission selon la revendication 1, une unité de réception selon la revendication 11 et étant configuré pour exécuter le procédé selon la revendication 10.
